# NEUE EUROPÄISCHE PATENTSCHRIFT

(11) **EP 2 401 904 B2**
(45) Veröffentlichungstag und Bekanntmachung des Hinweises auf die Entscheidung über den Einspruch: **24.03.2021**
(45) Hinweis auf die Patenterteilung: 06.01.2016
(21) Anmeldenummer: 11159358.8
(22) Anmeldetag: 23.03.2011
(51) Int. Cl.: A01D 41/127

(54) **Fahrerassistenzsystem für landwirtschaftliche Arbeitsmaschine**
Driver assistance system for agricultural vehicle
Système d'assistance du conducteur pour machine de travail agricole

(30) Priorität: 01.07.2010 DE 102010017676
(43) Veröffentlichungstag der Anmeldung: 04.01.2012
(73) Patentinhaber: CLAAS Selbstfahrende Erntemaschinen GmbH, 33428 Harsewinkel (DE)
(72) Erfinder: Baumgarten, Joachim, 48361, Beelen (DE); Neu, Sebastian, 49196, Bar Laer (DE); Bussmann, Christoph, 33428, Harsewinkel (DE); Wilken, Andreas, 49143, Bissendorf (DE); Vöcking, Henner, 33397, Rietberg (DE); Heitmann, Christoph, 48231, Warendorf (DE)
(74) Vertreter: CLAAS Gruppe

(56) Entgegenhaltungen:
- EP-A1- 1 297 733
- EP-A1- 1 297 733
- EP-A1- 1 446 997
- EP-A1- 1 704 767
- EP-A1- 1 731 017
- EP-A1- 1 731 017
- EP-A1- 2 220 926
- EP-A2- 0 586 999
- EP-A2- 1 371 278
- EP-A2- 2 057 882
- DE-C1- 19 800 238
- US-A- 6 119 442
- J. RADEMACHER: "Sanftes Dreschen schont das Korn, top agrar", Top Technik, July 2004 (2004-07), pages 62-64,
- "Verordnung (EG) Nr. 687/2008 der Kommission", Amtsblatt de Europäischen Union, 19 July 2008 (2008-07-19), pages 192/20-192/48,

## Beschreibung

Die Erfindung betrifft ein Fahrerassistenzsystem für landwirtschaftliche Arbeitsmaschinen nach dem Oberbegriff des Anspruchs 1.

Aus der DE 101 47 733 ist ein Fahrerassistenzsystem bekannt geworden, welches den Bediener einer landwirtschaftlichen Arbeitsmaschine bei der Optimierung der Arbeitsparameter der Arbeitsorgane unterstützt. Das Fahrerassistenzsystem umfasst neben einer komplexen Anzeigeeinheit eine Recheneinheit zur Verarbeitung diverser Sensorsignale. Die als Mähdrescher ausgeführte landwirtschaftliche Arbeitsmaschine umfasst eine Vielzahl von Arbeitsorganen, wie etwa ein Schneidwerk, eine Drescheinrichtung, Trennorgane und zumindest eine Reinigungseinrichtung, die mit einer Vielzahl von Sensiereinrichtungen gekoppelt sind, die neben Arbeitsparametern der Arbeitsorgane auch Effizienzparameter der landwirtschaftlichen Arbeitsmaschine, wie etwa Kornverlust, Kornqualität und Überkehrmenge detektieren können.

Die von den Sensiereinrichtungen ermittelbaren Informationen werden der zentralen Recheneinheit zugeführt, die dann aus diesen Signalen in der Anzeigeinrichtung visualisierbare Informationen ableitet. Die visualisierten Informationen umfassen neben Arbeitsparametern der landwirtschaftlichen Arbeitsmaschine, etwa die Dreschtrommeldrehzahl, die Reinigungsgebläsedrehzahl, den Erntegutdurchsatz, die Dreschkorbweite, auch Effizienzparameter, wie etwa die Kornverluste der Reinigungs- und der Trenneinrichtung. Zur Optimierung der verschiedenen Arbeitsparameter wird in der DE 101 47 733 nun eine Methode vorgeschlagen, bei der der Bediener die landwirtschaftliche Arbeitsmaschine in einem ersten Verfahrensschritt mit einer auf den zu erwartenden Erntegutdurchsatz abgestimmten Fahrgeschwindigkeit durch den zu erntenden Bestand führt, sodass der Mähdrescher in einem bestimmten Zeitintervall mit einer nahezu gleichbleibenden Erntegutmenge beaufschlagt wird. Der Bediener hat nun zunächst abzuwarten, dass der Mähdrescher einen sogenannten eingeschwungenen Zustand erreicht, bei dem ein annähernd gleichbleibendes, gutes oder schlechtes Arbeitsergebnis erzielt wird. Dieses Arbeitsergebnis wird aufgezeichnet und dem Bediener in der Anzeigeeinheit visualisiert. Stellt sich ein unbefriedigendes Arbeitsergebnis ein, ändert der Bediener des Mähdreschers zunächst einen erfolgversprechenden Arbeitsparameter eines Arbeitsorgans mehrmals und wartet jeweils die Einschwingphase des Mähdreschers mit dem geänderten Arbeitsparameter ab. Alle Arbeitsergebnisverläufe werden aufgezeichnet, sodass der Bediener schließlich entscheiden kann, bei welchem konkreten Wert des Arbeitsparameters das beste Arbeitsergebnis erzielt wurde. Dieser konkrete Wert wird dann an dem jeweiligen Arbeitsorgan eingestellt, sodass sich schließlich ein verbessertes Arbeitsergebnis der landwirtschaftlichen Arbeitsmaschine einstellt.

Eine derartige Methode hat vor allem den Nachteil, dass ein relativ großer Zeitraum benötigt wird, bis die verschiedenen Arbeitsparameter des Mähdreschers in einem optimierten Parameterbereich arbeiten, da für jeden Arbeitsparameter die offenbarte Einstellprozedur abgearbeitet werden muss. Zudem hängt eine schnelle und zielführende Optimierung bei einer derart strukturierten Einstellmethode maßgeblich von dem Kenntnisstand des Bedieners der landwirtschaftlichen Arbeitsmaschine ab, da sich die verschiedenen Arbeitsparameter mitunter über sehr komplexe Wechselwirkungen gegenseitig beeinflussen. Zudem ist es bei einer derartig strukturierten Optimierungsmethode nahezu unmöglich, kundenspezifische Anforderungen an das Erntegut zu erfüllen.

Es ist deshalb Aufgabe der Erfindung die beschriebenen Nachteile des Standes der Technik zu vermeiden und insbesondere ein Fahrerassistenzsystem zur Optimierung der Effizienz einer landwirtschaftlichen Arbeitsmaschine vorzuschlagen, welches innerhalb kürzester Zeit eine optimierte und an den Kundenwunsch angepasste Arbeitsweise der landwirtschaftlichen Arbeitsmaschine sicherstellt.

Diese Aufgabe wird erfindungsgemäß durch die kennzeichnenden Merkmale der unabhängigen Ansprüche 1 und 10 gelöst.

Indem der als Mähdrescher ausgeführte landwirtschaftliche Arbeitsmaschine ein Fahrerassistenzsystem umfasst, welches auswählbare Prozessführungsstrategien umfasst, wobei das Auswahlkriterium einer Prozessführungsstrategie die für einen bestimmten Verwendungszweck des Erntegutes erforderliche Qualität des Erntegutes und/oder Optimierungskriterien der Arbeitsorgane sind, wird sichergestellt, dass innerhalb kürzester Zeit eine optimierte und an den Kundenwunsch angepasste Arbeitsweise der landwirtschaftlichen Arbeitsmaschine erzielt wird.

Nach der Erfindung umfasst das editierbare Auswahlkriterium "Nahrungspflanzen", "Saatgut", "Futterpflanzen" und/oder "Industriepflanzen", sodass eine auf die notwendige Qualität des Erntegutes abgestimmte optimierte Arbeitsweise der landwirtschaftlichen Arbeitsmaschine für nahezu alle Verwendungszwecke des Erntegutes erreicht wird.

Eine mathematisch einfach umsetzbare, die notwendige Qualität des Erntegutes sicherstellende Prozessführungsstrategie wird in einer vorteilhaften Weiterbildung der Erfindung dann erreicht, wenn jede dieser Prozessführungsstrategien einen oder mehrere der Erntegutparameter "Bruchkorn", "Reinheit" und "Ausdrusch" in der Weise berücksichtigen,
- dass bei Aktivierung des Auswahlkriteriums "Nahrungspflanzen" nach einem Optimum von minimalem "Bruchkorn", maximalem "Ausdrusch" und maximaler "Reinheit" geregelt wird
- dass bei Aktivierung des Auswahlkriteriums "Saatgut" nach minimalem "Bruchkorn" geregelt wird und "Reinheit" und "Ausdrusch" nachrangige Priorität haben
- dass bei Aktivierung des Auswahlkriteriums "Futterpflanzen" nach maximalem "Ausdrusch" geregelt wird und "Reinheit" und "Bruchkorn" nachrangige Priorität haben
- dass bei Aktivierung des Auswahlkriteriums "Industriepflanzen" keinem der Erntegutparameter "Bruchkorn", "Reinheit" und "Ausdrusch" eine Priorität zukommt.

Ein besonders flexibel an kundenspezifische Anforderungen anpassbares Fahrerassistenzsystem wird dann geschaffen, wenn die in Kennlinien oder Algorithmen hinterlegten Abhängigkeiten der Erntegutparameter eines Auswahlkriteriums editierbar in der Steuer- und Regeleinrichtung hinterlegt sind.

Indem in einer weiteren vorteilhaften Ausgestaltung der Erfindung jede Prozessführungsstrategie zusätzlich oder alternativ die Optimierungskriterien "Maximale Druschqualität" und/oder "Kraftstoffeffizient" und/oder "Maximaler Durchsatz" und/oder "Ausgeglichen" umfassen kann, wird sichergestellt, dass neben den auf die Qualität des Erntegutes direkt gerichteten Qualitätsparametern auch die Arbeitsweise der landwirtschaftlichen Arbeitsmaschine an sich betreffende Qualitätsparameter berücksichtigt werden. Dies führt im Ergebnis dazu, dass die landwirtschaftliche Arbeitsmaschine nicht nur so genau wie notwendig sondern auch so effizient wie möglich arbeitet.

Eine besonders einfache und übersichtliche Handhabung des Fahrerassistenzsystems ergibt sich für den Bediener dann, wenn die Auswahlkriterien und/oder Optimierungskriterien dem Bediener des Mähdreschers in der Anzeigeeinheit auswählbar angezeigt werden und die Auswahl mittels Touchscreen-Funktion oder über Tasten erfolgen kann und die mittels des aktivierten Auswahlkriteriums und/oder Optimierungskriteriums bestimmte Prozessführungsstrategie über in der Steuer- und Regeleinrichtung hinterlegte Kennlinien oder Algorithmen umgesetzt wird.

Die die Arbeitsweise der landwirtschaftlichen Arbeitsmaschine an sich betreffenden Qualitätsparameter lassen sich in einer weiteren vorteilhaften Ausgestaltung der Erfindung dann besonders effizient beeinflussen, wenn die Arbeitsweise der Arbeitsorgane über Regelautomaten steuerbar ist und die Regelautomaten zumindest einen Fahrgeschwindigkeitsregler und/oder einen Dreschautomat und/oder einen Abscheideautomat und/oder einen Reinigungsautomat umfassen.

Damit der Bediener der landwirtschaftlichen Arbeitsmaschine ein optimaleres Verständnis von den durch das Fahrerassistenzsystem vorgenommenen Optimierungen erhält, ist in einer vorteilhaften Weiterbildung der Erfindung vorgesehen, dass in einem Hinweisfeld der Anzeigeeinheit der allgemeine Hinweis ergeht, dass und welche Auswirkungen die an Hand des Auswahlkriteriums oder Optimierungskriteriums ausgewählte Prozessführungsstrategie auf die Wirkungsweise der Regelautomaten und/oder der Erntegutparameter hat.

Eine besonders flexible Optimierung einer landwirtschaftlichen Arbeitsmaschine mit dem erfindungsgemäßen Fahrerassistenzsystem wird in einer vorteilhaften Ausgestaltung dann erreicht, wenn die Arbeitsweise der Regelautomaten editierbar ist, die Editierbarkeit dialogbasiert mittels der Anzeigeeinheit erfolgt und der Bediener oder automatisch mittels der Steuer- und Regeleinrichtung ein oder mehrere Regelautomaten zu- oder abgeschaltet oder editiert werden können.

Eine besonders effiziente Unterstützung zur Optimierung der landwirtschaftlichen Arbeitsmaschine wird in einer weiteren vorteilhaften Ausgestaltung der Erfindung dadurch erreicht, dass in der Steuer- und Regeleinrichtung optimierte Anpassungsvorschläge für einen oder mehrere Regelautomaten ermittelt und in einem Dialogfeld der Anzeigeeinheit dem Bediener angezeigt werden.

Indem das erfindungsgemäße Verfahren zum Betreiben einer landwirtschaftlichen Arbeitsmaschine mit dem erfindungsgemäßen Fahrerassistenzsystem die Schritte
- der Bediener der landwirtschaftlichen Arbeitsmaschine wird in einem ersten Menüschritt zur Auswahl der Prozessführungsstrategie aufgefordert, wobei die Prozessführungsstrategie alternativ oder zugleich die Aktivierung eines die Qualität des Erntegutes bestimmenden Auswahlkriteriums und/oder die Arbeitsweise der Arbeitsorgane bestimmenden Optimierungskriteriums umfasst
   b.) in Abhängigkeit von der gewählten Prozessführungsstrategie wird der Bediener im folgenden Menüschritt zur Auswahl des Auswahlkriteriums und/oder zur Aktivierung des Regelautomaten und dem zugehörigen Optimierungskriterium aufgefordert
   c.) das Fahrerassistenzsystem in Abhängigkeit von der vom Bediener der landwirtschaftlichen Arbeitsmaschine aktivierten Prozessführungsstrategie optimierte Arbeitsparameter für zumindest ein Arbeitsorgan ermittelt und die Einstellung des optimierten Arbeitsparameters an dem zumindest einen Arbeitsorgan bewirkt
   umfasst, wird sichergestellt, dass der Bediener der landwirtschaftlichen Arbeitsmaschine innerhalb kürzester Zeit eine optimierte und an den Kundenwunsch angepasste Arbeitsweise der landwirtschaftlichen Arbeitsmaschine vornehmen kann.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine als Mähdrescher ausgeführte landwirtschaftliche Arbeitsmaschine mit erfindungsgemäßem Fahrerassistenzsystem
- Figur 2: eine schematische Detailansicht des erfindungsgemäßen Fahrerassistenzsystems
- Figur 3: ein Flussdiagramm des Verfahrens zum Betreiben des erfindungsgemäßen Fahrerassistenzsystems
- Figur 4: die Struktur der Anzeigeeinrichtung zur Bestimmung der Auswahlkriterien einer ersten Prozessführungsstrategie
- Figur 5: die Struktur der Anzeigeeinrichtung mit aktivierten Hinweisfeldern in einer ersten Prozessführungsstrategie
- Figur 6: die Struktur der Anzeigeeinrichtung zur Bestimmung der Regelautomaten einer weiteren Prozessführungsstrategie
- Figur 7: die Struktur der Anzeigeeinrichtung zur Bestimmung der Optimierungskriterien der Regelautomaten der weiteren Prozessführungsstrategie

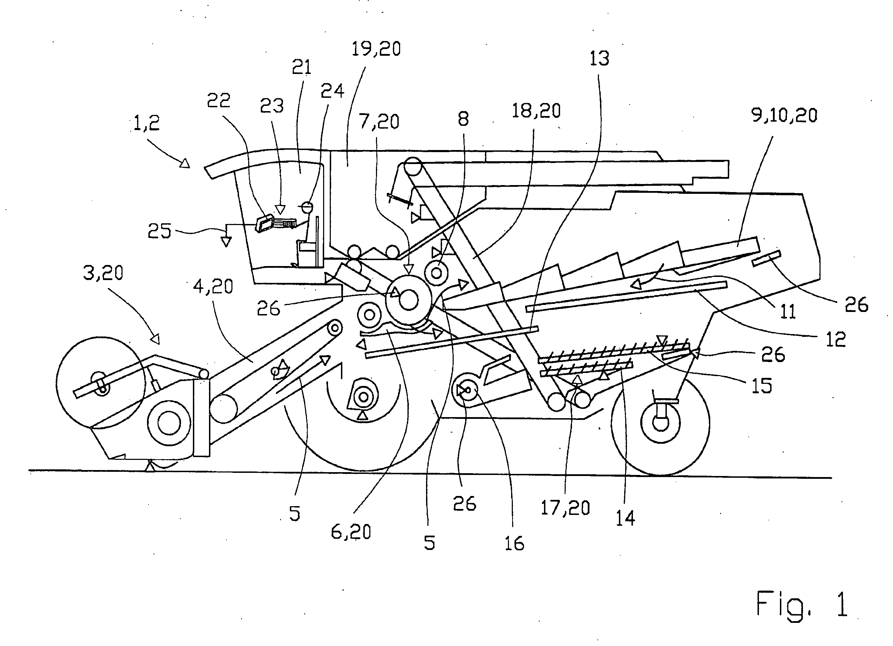

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine im dargestellten Ausführungsbeispiel als Hordenschüttler 9 ausgeführte Trenneinrichtung 10 übergeben wird. Es liegt im Rahmen der Erfindung, dass der Mähdrescher 2 an Stelle des Hordenschüttlers 9 über eine an sich bekannte und deshalb nicht dargestellte, als Trennrotor ausgeführte Trenneinrichtung 10 verfügt. Auf dem rotierenden Hordenschüttler 9 wird der Gutstrom 5 so gefördert, dass in dem Gutstrom enthaltene freibewegliche Körner 11 im untenseitigen Bereich des Hordenschüttlers 9 abgeschieden werden. Sowohl die am Dreschkorb 6 als auch am Hordenschüttler 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1 über eine Fahrzeugkabine 21 in der zumindest eine mit einer Anzeigeeinheit 22 versehene Steuer- und Regeleinrichtung 23 angeordnet ist, mittels derer automatisch oder vom Bediener 24 der landwirtschaftlichen Arbeitsmaschine 1 initiiert eine Vielzahl von noch näher zu beschreibenden Prozessen gesteuert werden können. Die Steuer- und Regeleinrichtung 23 kommuniziert über ein sogenanntes Bussystem 25 in an sich bekannter Weise mit einer Vielzahl von Sensorsystemen 26. Einzelheiten bezüglich der Struktur der Sensorsysteme 26 sind detailliert in der DE 101 47 733 beschrieben.

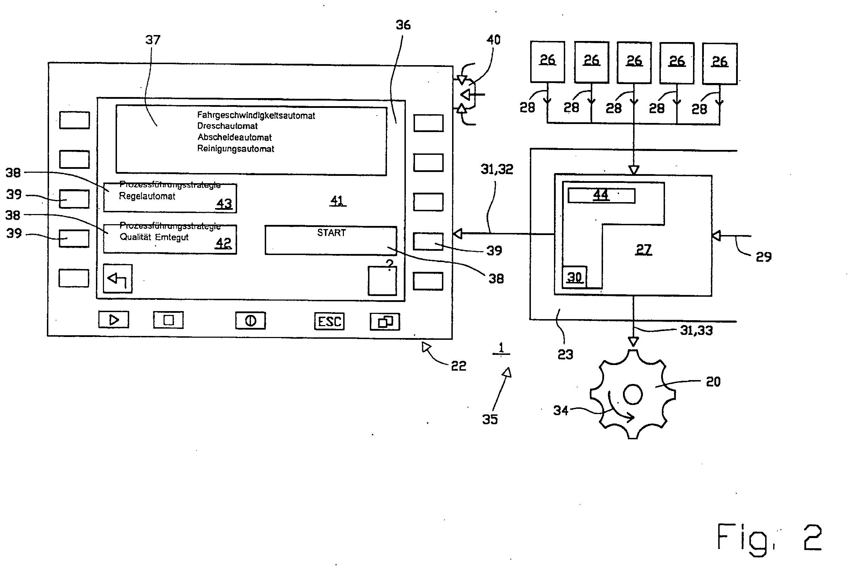

Fig. 2 zeigt eine schematische Darstellung der Anzeigeeinheit 22 der Steuer- und Regeleinrichtung 23 sowie die der Steuer- und Regeleinrichtung 23 zugeordnete und mit der Anzeigeeinheit 22 gekoppelte Recheneinheit 27. Die Recheneinheit 27 ist so beschaffen, dass sie neben den von den Sensorsystemen 26 generierten Informationen 28, externe Informationen 29 und in der Recheneinheit 27 selbst hinterlegte Informationen 30, wie etwa Expertenwissen, zu einer Vielzahl von Ausgangssignalen 31 verarbeiten kann. Die Ausgangssignale 31 sind dabei so beschaffen, dass sie zumindest Anzeigesteuersignale 32 und Arbeitsorgansteuersignale 33 umfassen, wobei erstere die Inhalte der Anzeigeeinheit 22 bestimmen und letztere die Änderung der unterschiedlichsten Arbeitsparameter 34 der Arbeitsorgane 20 der landwirtschaftlichen Arbeitsmaschine 1 bewirken, wobei Pfeil 34 symbolisch für die Dreschtrommeldrehzahl steht. Die Steuer- und Regeleinrichtung 23 mit der ihr zugeordneten Anzeigeeinheit 22 und der Recheneinheit 27 sind Bestandteil des erfindungsgemäßen Fahrerassistenzsystems 35, dessen Anzeigeeinheit 22 in einem Anzeigebereich 36 eine interaktive, natürlichsprachige Kommunikation zwischen dem Bediener 24 und dem Fahrerassistenzsystem 35 zulässt.

Der Anzeigebereich 36 der Anzeigeeinrichtung 22 umfasst neben einem oder mehreren Hinweisfeldern 37 Auswahlfelder 38 zur Aktivierung verschiedener noch näher zu beschreibender Prozessabläufe. Die Aktivierung des jeweiligen Auswahlfeldes 38 erfolgt entweder unmittelbar über dem jeweiligen Auswahlfeld 38 zugeordnete Tasten 39 und/oder einen zentralen Navigationsknopf 40, der durch Drehen und Drücken ein Navigieren zwischen den verschiedenen Auswahlfeldern 38 ermöglicht und/oder durch unmittelbare Berührung des jeweiligen Auswahlfeldes 38 durch den Bediener 24, sofern der Anzeigebereich 36 als Touchscreen-Monitor 41 ausgeführt ist. Figur 2 zeigt zugleich die Startstruktur des Anzeigebereichs 36, wobei die Auswahltaste "Prozessführungsstrategie Qualität Erntegut" 42 die Auswahl einer der erfindungsgemäßen, noch näher zu beschreibenden Prozessführungsstrategien, die Aktivierung der Auswahltaste "Prozessführungsstrategie Regelautomat" 43 ein Editieren der ebenfalls noch näher zu beschreibenden erfindungsgemäßen Regelautomaten und die Betätigung der Auswahltaste "Start" die Aktivierung des Fahrerassistenzsystems 35 ermöglicht. Im dargestellten Ausführungsbeispiel sind in dem Hinweisfeld 37 Informationen zur Aktivierung der noch zu beschreibenden Regelautomaten und der gewählten Prozessführungsstrategie 42, 43, gekoppelt mit der an den Bediener gerichteten Frage, was dieser tun möchte visualisiert. Nach Aktivierung eines Auswahlfeldes 38 wird schließlich ein in der Recheneinheit 27 der Steuer- und Regeleinrichtung 23 hinterlegte Softwaremodul 44 aktiviert, der aus der aktivierten Prozessführungsstrategie 42, 43 unter Einbeziehung der in der Recheneinheit 27 hinterlegten Informationen 30, sowie der verfügbaren externen und internen Informationen 28, 29 eine Optimierung der Arbeitsparameter 34 der Arbeitsorgane 20 bewirkt.

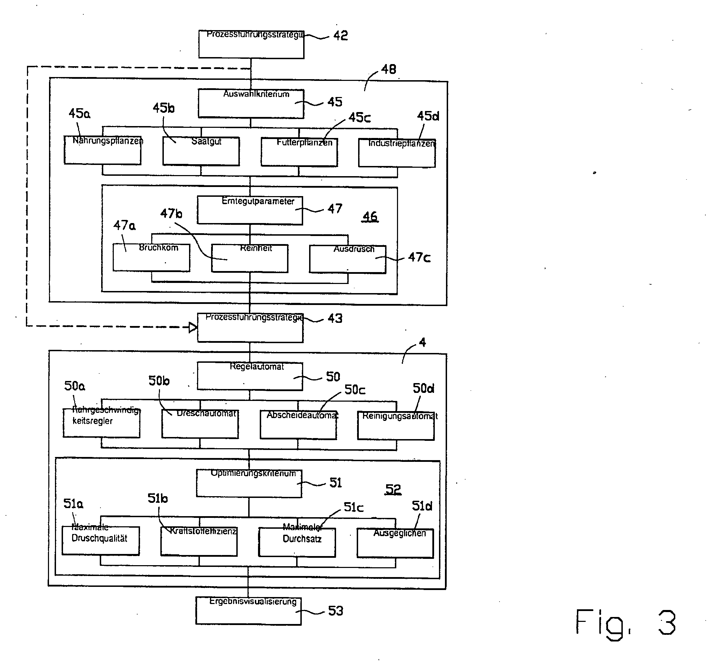

Figur 3 zeigte an Hand eines Flussdiagramms schematisch den Ablauf des erfindungsgemäßen Verfahrens zur Auswahl, Editierung und Aktivierung einer in der Recheneinheit 27 hinterlegten Prozessführungsstrategie 42, 43, wobei jede der Prozessführungsstrategien 42, 43 alternativ oder gemeinsam zur Optimierung der Arbeitsparameter 34 der Arbeitsorgane 20 der landwirtschaftlichen Arbeitsmaschine 1 herangezogen werden können. Wird die Prozessführungsstrategie "Qualität Erntegut" 42 aktiviert, wird unter den jeweils gegebenen Bedingungen eine effiziente und so präzise wie notwendige Arbeitsweise der landwirtschaftlichen Arbeitsmaschine 1 bewirkt. Hierfür muss der Bediener 24 der landwirtschaftlichen Arbeitsmaschine 1 ein Auswahlkriteriums 45a-d aus einer Vielzahl vordefinierter Auswahlkriterien 45 wählen. Je nach Verwendungszweck und der damit verbundenen, erforderlichen Qualität des zu erntenden Gutes sind in dem erfindungsgemäßen Fahrerassistenzsystem 35 Prozessführungsstrategien 42 für die Ernte von Nahrungspflanzen (Auswahlkriterium 45a), Saatgut (Auswahlkriterium 45b), Futterpflanzen (Auswahlkriterium 45c) und Industriepflanzen (Auswahlkriterium 45d) hinterlegt. Softwareseitig sind diese Prozessführungsstrategien 42 in Kennlinien oder Algorithmen 46 umgesetzt, die in Abhängigkeit vom jeweiligen Auswahlkriterium 45a-d verschiedene Erntegutparameter 47 miteinander verknüpfen. Die in den Kennlinien 46 zu definierenden mathematischen Abhängigkeiten können dann relativ einfach strukturiert sein, wenn sich die zu berücksichtigenden Erntegutparameter 47 auf einen oder mehrere der Erntegutparameter Bruchkom 47a, Reinheit 47b und Ausdrusch 47c beschränken, wobei sich die generellen Abhängigkeiten der verschiedenen Erntegutparameter 47a-c in Abhängigkeit von dem gewählten Auswahlkriterium 45 wie folgt ergeben:
Bei Aktivierung des Auswahlkriteriums Nahrungspflanzen 45a wird nach einem Optimum von minimalem Bruchkorn 47a, maximalem Ausdrusch 47c und maximaler Reinheit 47b geregelt. Ist das Auswahlkriteriums Saatgut 45b aktiviert, wird nach minimalem Bruchkorn 47a geregelt, wobei die Erntegutparameter Reinheit 47b und Ausdrusch 47c nachrangige Priorität haben. Bei Aktivierung des Auswahlkriteriums Futterpflanzen 45c regelt die Prozessführungsstrategie 42 nach maximalem Ausdrusch 47c und die Erntegutparameter Reinheit 47b und Bruchkorn 47a weisen wieder nachrangige Priorität auf. Ist hingegen das Auswahlkriterium Industriepflanzen 45d aktiviert, wird keinem der Erntegutparameter Bruchkorn 47a, Reinheit 47b und Ausdrusch 47c eine Priorität zugewiesen. Vielmehr wird hier ein Optimum zwischen diesen Erntegutparametern 47 angestrebt. Mit der vom Bediener 24 auszuführenden Aktivierung des jeweiligen Auswahlkriteriums 45 wird, wie beschrieben, Erntegutparameter-abhängig eine erste Optimierungsstufe 48 der Prozessführungsstrategie 42 durchlaufen, die schließlich zu einer an die notwendige Qualität des Erntegutes, hier die Körner 11, angepassten Arbeitsweise der als Mähdrescher 2 ausgeführten landwirtschaftlichen Arbeitsmaschine 1 führt.

Es liegt im Rahmen der Erfindung, dass die Abhängigkeiten der verschiedenen Erntegutparameter 47 entweder in den Kennlinien oder Algorithmen 46 vordefiniert oder editierbar in der Steuer- und Regeleinrichtung 23 hinterlegt sind. Im letzteren Fall ist es auch denkbar, dass die Anpassung der hinterlegten Kennlinien 46 mit Unterstützung eines Beraters an die spezifischen Bedingungen des jeweiligen landwirtschaftlichen Betriebes angepasst werden, wobei als Berater der seine Ackerflächen und spezifischen Hofbedingungen am besten kennende Landwirt selbst, externe Experten oder der jeweilige Hersteller der landwirtschaftlichen Arbeitsmaschine 1 fungieren können.

Um die Effizienz der landwirtschaftlichen Arbeitsmaschine 1 weiter zu erhöhen, ist alternativ oder zusätzlich eine, die weitere Prozessführungsstrategie 43 repräsentierende weitere Optimierungsstufe 49 vorgesehen, die die Arbeitsweise noch näher zu beschreibender Regelautomaten 50 optimiert. Die Regelautomaten 50 betreffen jeweils Funktionsbereiche der landwirtschaftlichen Arbeitsmaschine 1 und umfassen im dargestellten Ausführungsbeispiel einen Fahrgeschwindigkeitsregler 50a und/oder einen Dreschautomat 50b und/oder einen Abscheideautomat 50c und/oder einen Reinigungsautomat 50d. Es liegt im Rahmen der Erfindung, dass weitere Regelautomaten 50, wie etwa ein sogenannter Vorsatgeräteautomat oder ein Strohhäckslerautomat definiert werden können, die dann in nicht dargestellter Weise ebenfalls über die weitere Prozessführungsstrategie 43 auswähl- und gegebenenfalls editierbar -sind. Die Arbeitsweise jedes Regelautomaten 50a-d kann über Optimierungskriterien 51, die auf die Arbeitsweise der landwirtschaftlichen Arbeitsmaschine 1 selbst und die Erntegutparameter 45 gerichtet sind optimiert werden. Im dargestellten Ausführungsbeispiel umfassen die Optimierungskriterien 51 den Parameter "maximale Druschqualität" 51a, den Parameter "kraftstoffeffiziente Arbeitsweise der landwirtschaftlichen Arbeitsmaschine" 51b, den Parameter "maximaler Durchsatz" 51c sowie den Parameter "ausgeglichen" 51d, wobei der Parameter "ausgeglichen" 51d ein Optimum der übrigen Parameter 51a-c repräsentiert. Es liegt im Rahmen der Erfindung, dass einer, mehrere oder alle offenbarten Parameter 51a-d zugleich in der jeweiligen Prozessführungsstrategie 42 Berücksichtigung finden.

Die an sich bekannten und deshalb hier nicht näher beschriebenen mathematischen Abhängigkeiten der verschiedenen Optimierungskriterien 51 in Bezug auf den jeweils aktivierten Regelautomaten 50a-d sind in Analogie zur Aktivierung des jeweiligen Auswahlkriteriums 45 in Kennlinien oder Algorithmen 52 in der Recheneinheit 27 der Steuer- und Regeleinrichtung 23 hinterlegt und lassen sich allgemein wie folgt beschreiben:
Wird beispielsweise das Optimierungskriterium "maximale Druschqualität" 51a aktiviert, regelt der Fahrgeschwindigkeitsregler 50a die Fahrgeschwindigkeit und damit den Erntegutdurchsatz der landwirtschaftlichen Arbeitsmaschine 1 in Abhängigkeit von den Kornverlusten. Der Dreschautomat 50b regelt bei diesem Optimierungskriterium 51a die Parameter der Dreschorgane 7 wie etwa den Abstand des Dreschkorbes 6 zu den Dreschorganen 7 sowie die Drehzahl der Dreschorgane 7 so, dass ein intensiver Ausdrusch und ein niedriger Bruchkornanteil erreicht werden. Der Abscheideautomat 50c stellt bei demselben Optimierungskriterium 51a sicher, dass die Strohstrukturbeschädigungen im Erntegutstrom 5 im Bereich der Trenneinrichtung 10, vorzugsweise beim Einsatz rotierender Trenneinrichtungen, gering sind, sodass im Bereich der Trenneinrichtung 10 überwiegend Körner 11 und wenig Strohbestandteile abgeschieden werden. Letztlich stellt der Reinigungsautomat 50d sicher, dass bei Auswahl des Optimierungskriteriums "maximale Druschqualität" 51a eine hohe Kornsauberkeit erreicht wird und keine unausgedroschenen Getreideähren in den Korntank 19 gefördert werden.

Wird das Optimierungskriterium "kraftstoffeffizient" 51b aktiviert, nimmt der Dreschautomat 50b im Vergleich zum zuvor beschriebenen Optimierungskriterium 51a zugunsten eines niedrigeren Kraftstoffverbrauchs die Qualität des Ausdrusches zurück, stellt zugleich aber einen niedrigen Bruchkornanteil sicher. Der Abscheideautomat 50c agiert bei Aktivierung des Optimierungskriteriums 51b im Wesentlichen wie bei aktiviertem Optimierungskriterium 51a, ist aber bestrebt bei einer rotierenden Trenneinrichtung 10 den niedrigsten Energieverbrauch, also die niedrigst mögliche Rotordrehzahl einzustellen. Der Reinigungsautomat 50d stellt bei Vorgabe einer kraftstoffeffizienten Arbeitsweise ein Optimum zwischen Erntegutqualität und Reinigungsleistung sicher, wobei dieses Optimum maßgeblich von dem oben beschriebenen Auswahlkriterium 45 abhängt. Da eine kraftstoffeffiziente Arbeitsweise maßgeblich von dem Energiebedarf der Arbeitsorgane bestimmt wird hat der Fahrgeschwindigkeitsregler 50a bei aktiviertem Optimierungskriterium "kraftstoffeffizient" 51b nachrangige Bedeutung und regelt die Fahrgeschwindigkeit in Abhängigkeit von den Anforderungen der übrigen Regelautomaten 50b-50d. Solange jedoch die Parameter der übrigen Regelautomaten 50b-50d in einem optimalen Bereich liegen, wird eine energieeffiziente Arbeitsweise, nämlich der größtmögliche Korndurchsatz je Liter Kraftstoff, dann erreicht, wenn die landwirtschaftliche Arbeitsmaschine mit höchstmöglicher Fahrgeschwindigkeit betrieben wird.

Ist das Optimierungskriterium "maximaler Durchsatz" 51c aktiviert, werden alle Regelautomaten 50 an ihre Leistungsgrenze geführt, dass heißt der Fahrgeschwindigkeitsregel 50a stellt die maximal mögliche und zulässige Fahrgeschwindigkeit ein, der Dreschautomat 50b führt die Dreschorgane 7 zur maximal möglichen Dreschwerkleistung, der Abscheideautomat 50c ermöglicht die maximal mögliche Abscheideleistung und der Reinigungsautomat 50d regelt die Reinigungseinrichtung17 in analoger Weise in einen Bereich maximal möglicher und zulässiger Reinigungsleistung. Aufgrund dessen, dass "energieeffizient" unter der Voraussetzung, dass die Parameter der verschiedenen Regelautomaten 50 in einem optimalen Bereich liegen, auch "maximal möglicher Durchsatz" bedeuten kann, kann der Effekt eintreten, dass die Optimierungskriterien "kraftstoffeffizient" 51b und "maximaler Durchsatz" 51c dieselbe Regelstrategie bewirken können.

Wird hingegen das Optimierungskriterium "ausgeglichen" 51d aktiviert, wird der Dreschwerkautomat 50b so geregelt, dass er einen optimalen Ausdrusch bei niedrigem Bruchkornanteil bei hohem Durchsatz sicherstellt. Der Abscheideautomat 50c agiert bei Aktivierung des Optimierungskriteriums 51d in der Weise, dass sich ein Optimum aus maximal möglicher Gesamtdurchsatzleistung bei minimalem Bruchkorn und minimaler Strohzerkleinerung bei hohem Durchsatz einstellt. Der Reinigungsautomat 50d regelt die Reinigungseinrichtung 17 bei einer ausgeglichenen Arbeitsweise der Regelautomaten 50 nach einem Optimum an Kornsauberkeit und benötigter Reinigungsleistung. Da eine ausgeglichene Arbeitsweise der landwirtschaftlichen Arbeitsmaschine 1 maßgeblich von der Arbeitsweise der Regelautomaten 50b-50d bestimmt wird, hat der Fahrgeschwindigkeitsregler 50a bei aktiviertem Optimierungskriterium "ausgeglichen" 51d nachrangige Bedeutung und regelt die Fahrgeschwindigkeit in Abhängigkeit von den Anforderungen der übrigen Regelautomaten 50b-50d.

In einem letzten Verfahrensschritt 53 werden schließlich die ermittelten Parameter gemäß Figur 3 visualisiert, wobei die Art und Weise der Visualisierung im Folgenden näher beschrieben wird.

Gemäß Figur 2 und zugehöriger Beschreibung wird das erfindungsgemäße Fahrerassistenzsystem 35 dadurch gestartet, dass der Bediener 24 eines der Auswahlfelder 38 mittels Tasten 39 oder dem Navigationsknopf 40 oder via Touchscreenfunktion aktiviert.

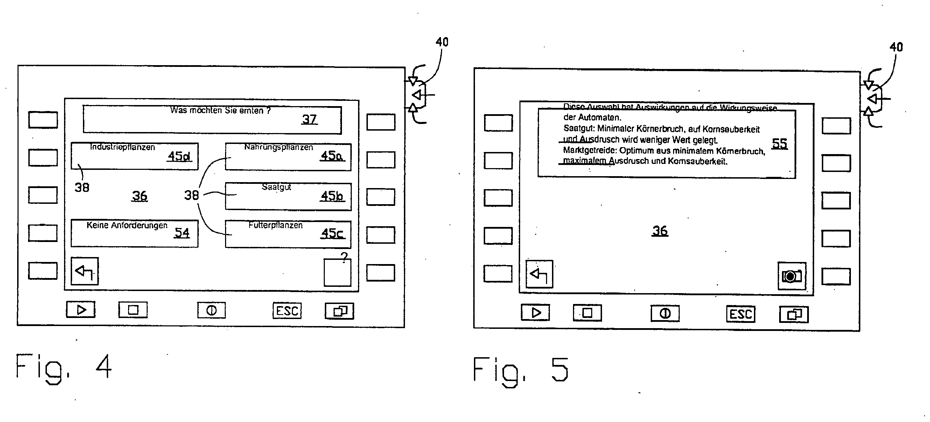

Indem der Bediener 24 das Auswahlfeld Prozessführungsstrategie "Qualität Erntegut" 42 aktiviert, werden gemäß Figur 4 in dem Anzeigebereich 36 die aktivierbaren Auswahlkriterien 45, hier Nahrungspflanzen 45a, Saatgut 45b, Futterpflanzen 45c und Industriepflanzen 45d visualisiert. Je nach Kundenwunsch wird der Bediener 24 eines der Auswahlkriterien 45a-d durch Aktivierung es jeweiligen Auswahlfeldes 38 bestimmen. In einer Ausgestaltungsvariante kann der Bediener 24 in einem Hinweisfeld 37 zunächst die Information erhalten, was er zu tun habe. Zudem kann ein weiters Auswahlfeld 54 vorgesehen sein, durch dessen Aktivierung die Bestimmung eines Auswahlkriteriums 45a-d unterbleibt. Dies kann dann der Fall sein, wenn entweder bereits das richtige Auswahlkriterium 45a-d aktiviert ist oder die Bestimmung eines Auswahlkriteriums 45a-d nicht vorgenommen werden soll.

Sofern ein Auswahlkriterium 45a-d ausgewählt wurde, kann in einer vorteilhaften Ausgestaltung gemäß Figur 5 vorgesehen sein, dass ein weiteres Hinweisfenster 55 geöffnet wird, in welchem dem Bediener 24 Abhängigkeiten und Wechselwirkungen zwischen dem aktivierten Auswahlkriterium 45a-d und dem oder den aktivierten Regelautomaten 50a-d visualisiert werden.

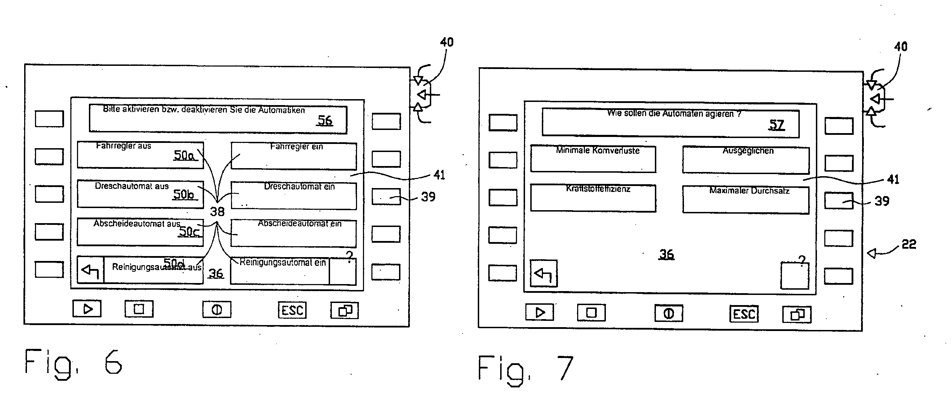

Figur 6 zeigt die Struktur des Anzeigebereichs 36 nachdem der Bediener 24 das Fahrerassistenzsystems 35 gestartet und in der Startanzeigestruktur nach Figur 2 das Auswahlfeld Prozessführungsstrategie "Regelautomat" 43 mittels Tasten 39, dem Navigationsknopf 40 oder via Touchscreenfunktion 41 aktiviert hat. Die nunmehr angezeigten Auswahlfelder 38 umfassen die Aktivierung oder Deaktivierung des Fahrgeschwindigkeitsreglers 50a, des Dreschautomaten 50b, des Abscheideautomaten 50c und des Reinigungsautomaten 50d. In einem Hinweisfeld kann der Bediener 24 zudem unmittelbar darauf hingewiesen werden, die Regelautomaten 50 zu aktivieren oder zu deaktivieren. Es liegt im Rahmen der Erfindung, dass die Aktivierung oder Deaktivierung von Regelautomaten 50 auch selbsttätig durch die Steuer- und Regeleinrichtung 23 vorgenommen werden kann, wobei dieses selbsttätige Aktivieren oder Deaktivieren beispielsweise dann ausgelöst wird, wenn erkannt wird, dass sich bestimmte Erntegutparameter 47 oder die Arbeitsweise der landwirtschaftlichen Arbeitsmaschine 1 insgesamt verschlechtern.

Hat der Bediener 24 den oder die Regelautomaten 50 editiert schaltet die Anzeigeeinheit 22 in die in Figur 7 dargestellte Struktur des Anzeigebereichs 36 um. Im Anzeigebereich 36 werden nunmehr die verschiedenen Optimierungskriterien 51a-d visualisiert, wobei jedes der Optimierungskriterien 51a-d wiederum mittels der Tasten 39, dem Navigationsknopf 40 oder via Touchscreenfunktion 41 aktiviert werden kann. Zudem wird dem Bediener 24 in einem Hinweisfeld 57 mitgeteilt, was von ihm in der visualisierten Anzeigestruktur erwartet wird.

Sind alle Auswahlkriterien 45 und Optimierungskriterien 51 bestimmt, werden gemäß Figur 2 und 3 die in dem Softwaremodul 44 der Steuer- und Regeleinrichtung 23 hinterlegten Kennlinien 46, 52 abgerufen und die Optimierung der Arbeitsparameter 34 der Arbeitsorgane 20 der landwirtschaftlichen Arbeitsmaschine 1 vorgenommen und je nach Ausgestaltungsvariante unmittelbar mittels der von der Steuer- und Regeleinrichtung 23 generierten Arbeitsorgansignale 33 an den jeweiligen Arbeitsorganen 20 eingestellt. Zugleich schaltet die Anzeigeeinheit 22 wieder auf die in Figur 2 dargestellte Struktur des Anzeigebereichs 36 um.

**Bezugszeichenliste:**

| | | | |
|---|---|---|---|
| 1 | Landwirtschaftliche Arbeitsmaschine | 31 | Ausgangssignal |
| 2 | Mähdrescher | 32 | Anzeigesignal |
| 3 | Getreideschneidwerk | 33 | Arbeitsorgansignal |
| 4 | Schrägförderer | 34 | Arbeitsparameter |
| 5 | Erntegutstrom | 35 | Fahrerassistenzsystem |
| 6 | Dreschkorb | 36 | Anzeigebereich |
| 7 | Dreschorgan | 37 | Hinweisfeld |
| 8 | Umlenktrommel | 38 | Auswahlfeld |
| 9 | Hordenschüttler | 39 | Taste |
| 10 | Trenneinrichtung | 40 | Navigationsknopf |
| 11 | Körner | 41 | Touchscreenmonitor |
| 12 | Rücklaufboden | 42 | Prozessführungsstrategie |
| 13 | Zuführboden | 43 | Prozessführungsstrategie |
| 14 | Siebebene | 44 | Softwaremodul |
| 15 | Siebebene | 45 | Auswahlkriterium |
| 16 | Gebläse | 46 | Kennlinie; Algorithmus |
| 17 | Reinigungseinrichtung | 47 | Erntegutparameter |
| 18 | Elevator | 48 | 1. Optimierungsstufe |
| 19 | Korntank | 49 | 2. Optimierungsstufe |
| 20 | Arbeitsorgan | 50 | Regelautomat |
| 21 | Fahrzeugkabine | 51 | Optimierungskriterium |
| 22 | Anzeigeeinheit | 52 | Kennlinie; Algorithmus |
| 23 | Steuer- und Regeleinrichtung | 53 | Visualisierung |
| 24 | Bediener | 54 | Auswahlfeld |
| 25 | Bussystem | 55 | Hinweisfeld |
| 26 | Sensorsystem | 56 | Hinweisfeld |
| 27 | Recheneinheit | 57 | Hinweisfeld |
| 28 | Interne Information | | |
| 29 | Externe Information | | |
| 30 | Information | | |

## Patentansprüche

1. Mähdrescher mit Fahrerassistenzsystem, wobei der Mähdrescher eine Vielzahl das den Mähdrescher durchlaufende Erntegut bearbeitende Arbeitsorgane umfasst und das Fahrerassistenzsystem von wenigstens einer Datenverarbeitungs- und Steuereinheit und zumindest einer Anzeigeeinheit gebildet wird und die Datenverarbeitungs- und Steuereinheit von maschineninternen Sensorsystemen generierte Informationen, in der Datenverarbeitungs- und Steuereinheit hinterlegbare Informationen und/oder externe Informationen verarbeitet,
**dadurch gekennzeichnet,**
**dass** das Fahrerassistenzsystem (35) auswählbare Prozessführungsstrategien (42, 43) umfasst, wobei das Auswahlkriterium (45) einer ersten Prozessführungsstrategie (42,) die für einen bestimmten Verwendungszweck des Erntegutes (5, 11) erforderliche Qualität des Erntegutes und/ das Optimierungskriterium (51) einer weiteren Prozessführungsstrategie (43) Optimierungskriterien 51a-d der Arbeitsorgane (20) sind und wobei das Auswahlkriterium (45) der ersten Prozessführungsstrategie (42) die Auswahlkriterien "Nahrungspflanzen" (45a), "Saatgut" (45b), "Futterpflanzen" (45c) und/oder "industriepflanzen" (45d) umfasst und die auf die Arbeitsweise der landwirtschaftlichen Arbeitsmaschine (1) selbst und Erntegutparameter (47) gerichteten Optimierungskriterien (51) der weiteren Prozessführungsstrategie (43) auf die Optimierung der Arbeitsweise von Regelautomaten (50a-d) gerichtet sind und wobei die weitere Prozessführungsstrategie (43) eine weitere Optimierungsstufe (49) bildet und die Regelautomaten (50a-d) jeweils Funktionsbereiche des Mähdreschers betreffen.

2. Mähdrescher mit Fahrerassistenzsystem nach Anspruch 1,
**dadurch gekennzeichnet,**
**dass** jede Prozessführungsstrategie (42) einen oder mehrere der Erntegutparameter (47) "Bruchkorn" (47a), "Reinheit" (47b) und "Ausdrusch" (47c) in der Weise berücksichtigt,
**dass** bei Aktivierung des Auswahlkriteriums "Nahrungspflanzen" (45a) nach einem Optimum von minimalem "Bruchkorn" (47a), maximalem "Ausdrusch" (47c) und maximaler "Reinheit" (47b) geregelt wird
**dass** bei Aktivierung des Auswahlkriteriums "Saatgut" (45b) nach minimalem "Bruchkorn" (47a) geregelt wird und "Reinheit" (47b) und "Ausdrusch" (47c) nachrangige Priorität haben
**dass** bei Aktivierung des Auswahlkriteriums "Futterpflanzen" (45c) nach maximalem "Ausdrusch" (47c) geregelt wird und "Reinheit" (47b) und "Bruchkorn" (47a) nachrangige Priorität haben
**dass** bei Aktivierung des Auswahlkriteriums "Industriepflanzen" (45d) keinem der Erntegutparameter "Bruchkorn" (47a), "Reinheit" (47b) und "Ausdrusch" (47c) eine Priorität zukommt.

3. Mähdrescher mit Fahrerassistenzsystem nach Anspruch 2,
**dadurch gekennzeichnet,**
**dass** die in Kennlinien oder Algorithmen (46) hinterlegten Abhängigkeiten der Erntegutparameter (47) eines Auswahlkriteriums (45a-45d) editierbar in der Steuer- und Regeleinrichtung (23) hinterlegt sind.

4. Mähdrescher mit Fahrerassistenzsystem nach Anspruch 1 bis 3,
**dadurch gekennzeichnet,**
**dass** die Prozessführungsstrategien (42, 43) zusätzlich oder alternativ die Optimierungskriterien (51) "maximale Druschqualität" (51a) und/oder "Kraftstoffeffizient" (51b) und/oder "Maximaler Durchsatz" (51c) und/oder "Ausgeglichen" (51d) umfassen kann.

5. Mähdrescher mit Fahrerassistenzsystem nach den Ansprüchen 3 bis 4
**dadurch gekennzeichnet,**
**dass** die Auswahlkriterien (45) und/oder Optimierungskriterien (51) dem Bediener (24) des Mähdreschers (2) in der Anzeigeeinheit (22) auswählbar angezeigt werden und die Auswahl mittels Touchscreen-Funktion (41) oder über Tasten (39, 40) erfolgen kann und die mittels des aktivierten Auswahlkriteriums (45) und/oder Optimierungskriteriums (51) bestimmte Prozessführungsstrategie (42, 43) über in der Steuer- und Regeleinrichtung (23) hinterlegte Kennlinien oder Algorithmen (46, 52) umgesetzt wird.

6. Mähdrescher mit Fahrerassistenzsystem nach Anspruch 5,
**dadurch gekennzeichnet,**
**dass** die Arbeitsweise der Arbeitsorgane (20) über Regelautomaten (50) steuerbar ist und die Regelautomaten (50) zumindest einen Fahrgeschwindigkeitsregler (50a) und/oder einen Dreschautomat (50b) und/oder einen Abscheideautomat (50c) und/oder einen Reinigungsautomat (50d) umfassen .

7. Mähdrescher mit Fahrerassistenzsystem nach Anspruch 6,
**dadurch gekennzeichnet,**
**dass** in einem Hinweisfeld (55) der Anzeigeeinheit (22) der allgemeine Hinweis ergeht, dass und welche Auswirkungen die an Hand des Auswahlkriteriums (45) oder Optimierungskriteriums (51) ausgewählte Prozessführungsstrategie (42, 43) auf die Wirkungsweise der Regelautomaten (50) und/oder der Erntegutparameter (47) hat.

8. Mähdrescher mit Fahrerassistenzsystem nach einem der Ansprüche 6-7,
**dadurch gekennzeichnet,**
**dass** die Arbeitsweise der Regelautomaten (50) editierbar ist und das die Editierbarkeit dialogbasiert mittels der Anzeigeeinheit (22) erfolgen kann und der Bediener (24) oder automatisch mittels der Steuer- und Regeleinrichtung (23) ein oder mehrere Regelautomaten (50) zu- oder abgeschaltet oder editiert werden können.

9. Mähdrescher mit Fahrerassistenzsystem nach Anspruch 8,
**dadurch gekennzeichnet,**
**dass** in der Steuer- und Regeleinrichtung (23) optimierte Anpassungsvorschläge für einen oder mehrere Regelautomaten (50) ermittelt und in einem Dialogfeld der Anzeigeeinheit (22) dem Bediener (24) angezeigt werden.

10. Verfahren zum Betreiben eines Mähdreschers mit Fahrerassistenzsystem nach einem der Ansprüche 1-9,
**dadurch gekennzeichnet,**
**dass** das Verfahren die Schritte
a.) der Bediener (24) der landwirtschaftlichen Arbeitsmaschine (1, 2) wird in einem ersten Menüschritt zur Auswahl der Prozessführungsstrategie (42, 43) aufgefordert, wobei die Prozessführungsstrategie (42, 43) alternativ oder zugleich die Aktivierung eines die Qualität des Erntegutes (5, 11) bestimmenden Auswahlkriteriums (45) und/oder die Arbeitsweise der Arbeitsorgane (20) bestimmenden Optimierungskriteriums (51) umfasst
b.) in Abhängigkeit von der gewählten Prozessführungsstrategie (42, 43) wird der Bediener (24) im folgenden Menüschritt zur Auswahl des Auswahlkriteriums (45a-d) und/oder zur Aktivierung des Regelautomaten (50a-d) und dem zugehörigen Optimierungskriterium (51) aufgefordert
c.) das Fahrerassistenzsystem (35) in Abhängigkeit von der vom Bediener (24) der landwirtschaftlichen Arbeitsmaschine (1, 2) aktivierten Prozessführungsstrategie (42, 43) optimierte Arbeitsparameter (34) für zumindest ein Arbeitsorgan (20) ermittelt und die Einstellung des optimierten Arbeitsparameters (34) an dem zumindest einen Arbeitsorgan (20) bewirkt. umfasst.

## Claims

1. A combine harvester comprising a driver assist system, wherein the combine harvester has a plurality of working members which process the crop material passing through the combine harvester and the driver assist system is formed by at least one data processing and control unit and at least one display unit and the data processing and control unit processes information generated by machine-internal sensor systems, information which can be stored in the data processing and control unit and/or external information,
**characterised in that**
the driver assist system (35) includes selectable process implementation strategies (42, 43), wherein the selection criterion (45) of a first process implementation strategy (42) is the quality of the crop material required for an intended purpose of use of the crop material (5, 11) and/or the optimisation criterium (51) of a further process implementation strategy (43) are optimisation criteria (51a-d) of the working members (20) and wherein the selection criterion (45) of the first process implementation strategy (42) includes the selection criteria "food plants" (45a), "seed material" (45b), "animal feed plants" (45c) and/or "industrial plants" (45d) and the optimisation criteria (51) of the further process implementation strategy (43), that are directed to the mode of operation of the agricultural working machine (1) itself and crop material parameters (47) are directed to optimisation of the mode of operation of automatic regulating devices (50a-d) and wherein the further process implementation strategy (43) forms a further optimisation stage (49) and the automatic regulating devices (50a-d) respectively concern functional regions of the combine harvester.

2. A combine harvester comprising a driver assist system according to claim 1 **characterised in that** each process implementation strategy (42) takes account of one or more of the crop material parameters (47) "broken grain" (47a), "purity" (47b) and "threshed-out material" (47c) in such a way that
upon activation of the selection criterion "food plants" (45a) regulation is effected in accordance with an optimum of minimum "broken grain" (47a), maximum "threshed-out material" (47c) and maximum "purity" (47b), and
upon activation of the selection criterion "seed material" (45b) regulation is effected in accordance with minimum "broken grain" (47a) and "purity" (47b) and "threshed-out material" (47c) have lower priority,
upon activation of the selection criterion "animal feed plants" (45c) regulation is effected in accordance with maximum "threshed-out material" (47c) and "purity" (47b) and "broken grain" (47a) have lower priority, and
upon activation of the selection criterion "industrial plants" (45d) a priority is attributed to none of the crop material parameters "broken grain" (47a), "purity" (47b) and " threshed-out material" (47c).

3. A combine harvester comprising a driver assist system according to claim 2 **characterised in that** the dependencies stored in characteristic curves or algorithms (46) of the crop material parameters (47) of a selection criterion (45a-45d) are stored editably in the closed-loop and open-loop control device (23).

4. A combine harvester comprising a driver assist system according to claims 1 to 3 **characterised in that** the process implementation strategies (42, 43) can additionally or alternatively include the optimisation criteria (51) "maximum threshing quality" (51a) and/or " fuel efficient" (51b) and/or "maximum throughput" (51c) and/or "balanced" (51d).

5. A combine harvester comprising a driver assist system according to claims 3 to 4 **characterised in that** the selection criteria (45) and/or optimisation criteria (51) are displayed selectably to the operator (24) of the combine harvester (2) in the display unit (22) and the selection can be made by means of a touchscreen function (41) or by way of buttons (39, 40) and the process implementation strategy (42, 43) determined by means of the activated selection criterion (45) and/or optimisation criterion (51) is implemented by way of characteristic curves or algorithms (46, 52) stored in the closed-loop and open-loop control device (23).

6. A combine harvester comprising a driver assist system according to claim 5 **characterised in that** the mode of operation of the working members (20) is controllable by way of automatic regulating devices (50) and the automatic regulating devices (50) include at least a travel speed regulator (50a) and/or an automatic threshing device (50b) and/or an automatic separating device (50c) and/or an automatic cleaning device (50d).

7. A combine harvester comprising a driver assist system according to claim 6 **characterised in that** an indication field (55) of the display unit (22) provides a general indication that and what effects the process implementation strategy (42, 43) selected on the basis of the selection criterion (45) or optimisation criterion (51) has on the mode of operation of the automatic regulating devices (50) and/or the crop material parameters (47).

8. A combine harvester comprising a driver assist system according to one of claims 6 and 7 **characterised in that** the mode of operation of the automatic regulating devices (50) is editable and editability can be effected in dialog-based fashion by means of the display unit (22) and one or more automatic regulating devices (50) can be turned on or off or edited by the operator (24) or automatically by means of the closed-loop and open-loop control device (23).

9. A combine harvester comprising a driver assist system according to claim 8 **characterised in that** in the closed-loop and open-loop control device (23) optimised adaptation proposals are ascertained for one or more automatic regulating devices (50) and are displayed to the operator (24) in a dialog field of the display unit (22).

10. A method of operating a combine harvester comprising a driver assist system according to one of claims 1 to 9 **characterised in that** the method includes the steps
a) the operator (24) of the agricultural working machine (1, 2) is prompted in a first menu step to select the process implementation strategy (42, 43), wherein the process implementation strategy (42, 43) alternatively or at the same time includes activation of a selection criterion (45) determining the quality of the crop material (5, 11) and/or an optimisation criterion (51) determining the mode of operation of the working members (20),
b) in dependence on the selected process implementation strategy (42, 43) the operator (24) is prompted in the following menu step to select the selection criterion (45a-d) and/or to activate the automatic regulating device (50a-d) and the associated optimisation criterion (51),
c) the driver assist system (35) ascertains optimised operating parameters (34) for at least one working member (20) in dependence on the process implementation strategy (42, 43) activated by the operator (24) of the agricultural working machine (1, 2) and causes setting of the optimised working parameter (34) at the at least one working member (20).

## Revendications

1. Moissonneuse-batteuse avec système d'assistance au conducteur, la moissonneuse-batteuse comprenant une pluralité d'organes de travail travaillant le produit récolté qui traverse la moissonneuse-batteuse, et le système d'assistance au conducteur étant formé par au moins une unité de traitement de données et de commande et au moins une unité d'affichage, et l'unité de traitement de données et de commande traitant des informations générées par des systèmes de capteurs internes à la machine, des informations mémorisables dans l'unité de traitement de données et de commande et/ou des informations externes, **caractérisée en ce que** le système d'assistance au conducteur (35) comprend des stratégies sélectionnables de conduite de processus (42, 43), le critère de sélection (45) d'une première stratégie de conduite de processus (42,) étant la qualité du produit récolté requise pour un usage déterminé du produit récolté (5, 11) et/ le critère d'optimisation (51) d'une autre stratégie de conduite de processus (43) étant des critères d'optimisation 51a-d des organes de travail (20), et le critère de sélection (45) de la première stratégie de conduite de processus (42) comprenant les critères de sélection « plantes alimentaires » (45a), « semences » (45b), « plantes fourragères » (45c) et/ou « plantes industrielles » (45d), et les critères d'optimisation (51) de l'autre stratégie de conduite de processus (43) orientés sur le mode de travail de la machine de travail agricole (1) elle-même et sur des paramètres de produit récolte (47) étant orientés sur l'optimisation du mode de travail d'automates de réglage (50a-d), et l'autre stratégie de conduite de processus (43) formant un autre degré d'optimisation (49), et les automates de réglage (50a-d) concernant respectivement des zones fonctionnelles de la moissonneuse-batteuse.

2. Moissonneuse-batteuse avec système d'assistance au conducteur selon la revendication 1, **caractérisée en ce que** chaque stratégie de conduite de processus (42) prend en compte un ou plusieurs des paramètres de produit récolté (47) que sont « grains cassés » (47a), « propreté » (47b) et « battage » (47c), de façon
qu'en cas d'activation du critère de sélection « plantes alimentaires » (45a) les réglages privilégient de manière optimale un minimum de « grains cassés » (47a), un maximum de « battage » (47c) et un maximum de « propreté » (47b)
qu'en cas d'activation du critère de sélection « semences » (45b) les réglages privilégient un minimum de « grains cassés » (47a) et que « propreté » (47b) et « battage » (47c) soient secondaires
qu'en cas d'activation du critère de sélection « plantes fourragères » (45c) les réglages privilégient un maximum de « battage » (47c) et que « propreté » (47b) et « grains cassés » (47a) soient secondaires
qu'en cas d'activation du critère de sélection « plantes industrielles » (45d) aucun des paramètres de produit récolté que sont « grains cassés » (47a), « propreté » (47b) et « battage » (47c) ne soit prioritaire.

3. Moissonneuse-batteuse avec système d'assistance au conducteur selon la revendication 2, **caractérisée en ce que** les relations entre les paramètres de produit récolté (47) d'un critère de sélection (45a-45d), mémorisées sous forme de courbes caractéristiques ou d'algorithmes (46), sont mémorisées sous forme modifiable dans le dispositif de commande et de réglage (23).

4. Moissonneuse-batteuse avec système d'assistance au conducteur selon la revendication 1 à 3, **caractérisée en ce que** les stratégies de conduite de processus (42, 43) peuvent comprendre en complément ou en remplacement les critères d'optimisation (51) « qualité maximale de battage » (51a) et/ou « économies de carburant » (51b) et/ou « débit maximal » (51c) et/ou « équilibre » (51d).

5. Moissonneuse-batteuse avec système d'assistance au conducteur selon les revendications 3 à 4, **caractérisée en ce que** les critères de sélection (45) et/ou les critères d'optimisation (51) sont montrés à l'utilisateur (24) de la moissonneuse-batteuse (2) de manière sélectionnable sur l'unité d'affichage (22), et la sélection peut s'effectuer à l'aide d'une fonction d'écran tactile (41) ou par l'intermédiaire de touches (39, 40), et la stratégie de conduite de processus (42, 43) déterminée à l'aide du critère de sélection (45) et/ou du critère d'optimisation (51) activé est convertie en courbes caractéristiques ou en algorithmes (46, 52) mémorisés dans le dispositif de commande et de réglage (23).

6. Moissonneuse-batteuse avec système d'assistance au conducteur selon la revendication 5, **caractérisée en ce que** le mode de fonctionnement des organes de travail (20) est commandable par l'intermédiaire d'automates de réglage (50), et les automates de réglage (50) comprennent au moins un régulateur de vitesse de marche (50a) et/ou un automate de battage (50b) et/ou un automate de séparation (50c) et/ou un automate de nettoyage (50d).

7. Moissonneuse-batteuse avec système d'assistance au conducteur selon la revendication 6, **caractérisée en ce que** dans un champ d'information (55) de l'unité d'affichage (22) apparaît l'information générale précisant si la stratégie de conduite de processus (42, 43) sélectionnée à l'aide du critère de sélection (45) ou du critère d'optimisation (51) a des répercussions sur le mode de fonctionnement des automates de réglage (50) et/ou des paramètres de produit récolté (47), et lesquelles.

8. Moissonneuse-batteuse avec système d'assistance au conducteur selon une des revendications 6-7, **caractérisée en ce que** le mode de fonctionnement des automates de réglage (50) est modifiable, et les modifications peuvent s'effectuer sur la base d'un dialogue au moyen de l'unité d'affichage (22), et un ou plusieurs automates de réglage (50) peuvent être mis en ou hors service ou modifiés par l'utilisateur (24) ou automatiquement au moyen du dispositif de commande et de réglage (23) .

9. Moissonneuse-batteuse avec système d'assistance au conducteur selon la revendication 8, **caractérisée en ce que** des propositions d'adaptation optimisées dans le dispositif de commande et de réglage (23) et destinées à un ou plusieurs automates de réglage (50) sont déterminées et montrées à l'utilisateur (24) dans un champ de dialogue de l'unité d'affichage (22).

10. Procédé pour exploiter une moissonneuse-batteuse avec système d'assistance au conducteur selon une des revendications 1 à 9, **caractérisé en ce que** le procédé comporte les étapes suivantes
a.) l'utilisateur (24) de la machine de travail agricole (1, 2) est invité, dans une première étape de menu, à sélectionner la stratégie de conduite de processus (42, 43), la stratégie de conduite de processus (42, 43) comprenant en complément ou en remplacement l'activation d'un critère de sélection (45) déterminant la qualité du produit récolté (5, 11) et/ou d'un critère d'optimisation (51) déterminant le mode de fonctionnement des organes de travail (20)
b.) en fonction de la stratégie de conduite de processus sélectionnée (42, 43), l'utilisateur (24) est invité, dans l'étape de menu suivante, à sélectionner le critère de sélection (45a-d) et/ou à activer l'automate de réglage (50a-d) et le critère d'optimisation (51) correspondant
c.) en fonction de la stratégie de conduite de processus (42, 43) activée par l'utilisateur (24) de la machine de travail agricole (1, 2), le système d'assistance au conducteur (35) détermine des paramètres de travail optimisés (34) pour au moins un organe de travail (20) et procède au réglage du paramètre de travail optimisé (34) au niveau du au moins un organe de travail (20).
